# EUROPÄISCHE PATENTSCHRIFT

(11) **EP 3 044 571 B1**
(45) Veröffentlichungstag und Bekanntmachung des Hinweises auf die Patenterteilung: **10.10.2018**
(21) Anmeldenummer: 14758522.8
(22) Anmeldetag: 28.08.2014
(51) Int. Cl.: G01N 21/89, G01M 99/00, G01N 21/93, G06T 7/00

(54) **VERFAHREN UND VORRICHTUNG ZUR ÜBERPRÜFUNG EINES INSPEKTIONSSYSTEMS ZUR ERKENNUNG VON OBERFLÄCHENDEFEKTEN**
METHOD AND DEVICE FOR TESTING AN INSPECTION SYSTEM FOR DETECTING SURFACE DEFECTS
PROCÉDÉ ET DISPOSITIF DE VÉRIFICATION D'UN SYSTÈME D'INSPECTION SERVANT À DÉTECTER DES DÉFAUTS DE SURFACES

(30) Priorität: 10.09.2013 DE 102013109915
(43) Veröffentlichungstag der Anmeldung: 20.07.2016
(73) Patentinhaber: ThyssenKrupp Steel Europe AG, 47166 Duisburg (DE)
(72) Erfinder: HENKEMEYER, Harald, 47441 Moers (DE); MISSMAHL, Wolf, 47877 Willich (DE)
(74) Vertreter: thyssenkrupp Intellectual Property GmbH
(86) Internationale Anmeldenummer: PCT/EP2014/068306
(87) Internationale Veröffentlichungsnummer: WO 2015/036261

(56) Entgegenhaltungen:
- EP-A1- 1 901 230
- DE-A1- 10 065 321
- DE-A1-102010 043 632
- US-A1- 2007 154 080
- US-A1- 2010 208 979

## Beschreibung

Die Erfindung betrifft ein Verfahren zur Überprüfung eines Inspektionssystems zur Erkennung von Oberflächendefekten eines Produkts, vorzugsweise Stahlflachprodukts. Ferner betrifft die Erfindung ein durch ein solches Verfahren überprüfbares Inspektionssystem, mit wenigstens einer Kamera, vorzugsweise Digitalkamera, zur Erzeugung wenigstens einer Aufnahme von wenigstens einer Oberfläche wenigstens eines Produkts und mit einer Digitalisierungseinheit zur Digitalisierung der Aufnahme.

Bei der Herstellung von Produkten, bei denen an die Oberfläche besondere Qualitätsanforderungen gestellt werden, wird bedarfsweise eine Qualitätssicherung in der Weise durchgeführt, dass mit einem Inspektionssystem die Qualität der Oberfläche des Produkts geprüft wird. Werden bei dieser Prüfung nicht tolerierbare Fehler festgestellt, kann das Produkt aussortiert werden. Bei entsprechenden Produkten handelt es sich beispielsweise um Metallprodukte, wie Stahl- oder Leichtmetallflachprodukte. Als Flachprodukte werden dabei üblicherweise alle als Band, Blech, Zuschnitt oder Platine vorliegenden Walzprodukte im warm- oder kaltgewalzten Zustand verstanden. Insbesondere kommen beschichtete oder unbeschichtete Stahlbänder in Frage.

Stahlbänder werden mit großen Längen und mit hohen Geschwindigkeiten produziert, wobei das fertige Stahlband zu einem Coil aufgewickelt wird. Soll die Oberflächenqualität von Stahlbändern oder vergleichbaren Produkten inline und zerstörungsfrei erfasst werden, muss die Qualitätsprüfung der Oberfläche sehr schnell und zuverlässig erfolgen.

Um eine automatisierte und zerstörungsfreie Qualitätsprüfung zu ermöglichen, sind Verfahren und Inspektionssysteme bekannt, bei denen wenigstens eine Kamera Aufnahmen von der Oberfläche des Produkts erzeugt und diese in digitalisierter Form an eine Bildverarbeitungseinrichtung weitergibt. Diese prüft die Aufnahmen dann auf Oberflächendefekte und klassifiziert diese hinsichtlich der Art der Oberflächendefekte. Anhand der Anzahl und der Art der Oberflächendefekte auf einem bestimmten Abschnitt der Oberfläche des Produkts kann automatisch entschieden werden, ob dieser Bereich die Qualitätsvorgaben erfüllt oder gegebenenfalls der entsprechende Bereich des Produkts bzw. das gesamte Produkt verworfen werden muss.

Damit die automatisierte Qualitätssicherung zufriedenstellende Ergebnisse liefert, werden dem Inspektionssystem in einer einleitenden Trainingsphase verschiedene digitalisierte Aufnahmen von fehlerhaften Produktoberflächen zugeführt. Während dieser Trainingsphase wird das Inspektionssystem hinsichtlich der Fehlererkennung und der Fehlerklassifizierung kalibriert. Nach erfolgreichem Training und abgeschlossener Kalibrierung kann das Inspektionssystem zur Qualitätssicherung eingesetzt werden. Im Betrieb muss jedoch in regelmäßigen Abständen überprüft werden, ob das Inspektionssystem weiterhin zufriedenstellend arbeitet oder ob eine Anpassung bzw. eine erneute Kalibrierung erforderlich ist. Auf diese Weise soll verhindert werden, dass relevante Oberflächendefekte unerkannt bleiben oder nicht relevante Oberflächendefekte versehentlich als relevante Oberflächendefekte eingestuft werden.

Zur Überprüfung der Funktionsweise eines Inspektionssystems sind verschiedene Verfahren bekannt. Bei einigen Verfahren wird die zu inspizierende Oberfläche in regelmäßigen zeitlichen Abständen gezielt mit Oberflächendefekten versehen, wobei geprüft wird, ob diese Oberflächendefekte vom Inspektionssystem als Fehler erkannt werden. Um zu vermeiden, dass die zu inspizierende Oberfläche für die Überprüfung des Inspektionssystems beschädigt werden muss, werden bei anderen Verfahren in regelmäßigen zeitlichen Abständen Abbildungen von Oberflächendefekten auf die zu inspizierende Oberfläche geklebt. Sodann wird untersucht, ob die Oberflächendefekte erkannt werden. Dabei wird zwar die zu inspizierende Oberfläche nicht beschädigt, weil die aufgeklebten Abbildungen wieder von der inspizierten Oberfläche abgezogen werden können. Allerdings muss in der Regel der Herstellungsprozess für das Produkt unterbrochen werden, um eine Abbildung eines Oberflächendefekts auf die zu inspizierende Oberfläche aufzukleben. Dies ist insbesondere bei der Herstellung von sehr schnell bewegten Metallbändern der Fall, da die Metallbänder eine zu hohe Verschubgeschwindigkeit haben, um Abbildungen von Oberflächendefekten auf die Oberfläche des bewegten Metallbandes zu kleben. Damit der Herstellungsprozess nicht unterbrochen werden muss, basiert ein bekanntes Verfahren zur Überprüfung eines Inspektionssystems darauf, der Bildverarbeitungseinrichtung des Inspektionssystems, anstelle eines durch die wenigstens eine Kamera aufgenommenen digitalisierten Bildes, ein digitalisiertes Bild einer zuvor aufgenommenen Testoberfläche zuzuspielen und diese von der Bildverarbeitungseinrichtung auswerten zu lassen. Anhand des Auswerteergebnisses kann überprüft werden, ob die Fehlererkennung und Fehlerklassifizierung zufriedenstellend erfolgt. Ein solches Verfahren ist aus DE 100 65 321 A1 bekannt.

Bei dem letztgenannten Verfahren besteht jedoch der Nachteil, dass die Bildverarbeitungseinrichtung, während diese das Referenzbild einer Referenzoberfläche untersucht, nicht die reale Oberfläche des Produkts auf Fehler untersuchen kann. Oberflächendefekte können also unerkannt bleiben. Außerdem hat sich in der Praxis gezeigt, dass eine anhand der Referenzbilder durchgeführte Kalibrierung nicht immer zu zufriedenstellenden Genauigkeiten des Inspektionssystems führt.
Daher liegt der vorliegenden Erfindung die Aufgabe zugrunde, ein Verfahren zur Überprüfung eines Inspektionssystems zur Erkennung von Oberflächendefekten eines Produkts und ein überprüfbares Inspektionssystem jeweils der eingangs genannten und zuvor näher beschriebenen Art derart auszugestalten und weiterzubilden, dass eine Qualitätssicherung mit sehr hoher Güte erreicht werden kann, ohne den Produktionsprozess des Produkts mit der zu inspizierenden Oberfläche nennenswert zu beeinträchtigen.

Diese Aufgabe ist bei einem Verfahren gemäß Anspruch 1 gelöst, bei dem wenigstens eine Kamera, vorzugsweise Digitalkamera, wenigstens eine Aufnahme von einer Oberfläche wenigstens eines Produkts erzeugt, bei dem die wenigstens eine Aufnahme digitalisiert an eine Bildverarbeitungseinrichtung übergeben wird, bei dem wenigstens eine digitalisierte Darstellung eines Oberflächendefekts in die digitalisierte Aufnahme integriert wird, bei dem die Bildverarbeitungseinrichtung anhand der digitalisierten Aufnahme inklusive der digitalisierten Darstellung eines Oberflächendefekts eine Fehlererkennung durchführt und bei dem ermittelt wird, ob die Bildverarbeitungseinrichtung die digitalisierte Darstellung eines Oberflächendefekts als Fehler der inspizierten Oberfläche erkennt.

Die zuvor genannte Aufgabe ist zudem bei einem Inspektionssystem gemäß des Oberbegriffs des Anspruchs 13 dadurch gelöst, dass eine Integrationseinheit zum Integrieren einer digitalisierten Darstellung eines Oberflächendefekts in die digitalisierte Aufnahme vorgesehen ist, dass eine Bildverarbeitungseinrichtung zur Fehlererkennung anhand der digitalisierten Aufnahme, inklusive der digitalisierten Darstellung eines Oberflächendefekts, vorgesehen ist und dass eine Ermittlungseinheit zur Ermittlung, ob durch die Bildverarbeitungseinrichtung die digitalisierte Darstellung eines Oberflächendefekts als Fehler der inspizierten Oberfläche erkannt wird, vorgesehen ist.

Die Erfindung basiert also darauf, dass zunächst mittels einer Kamera eine Aufnahme von einer zu inspizierenden Oberfläche eines Produkts erzeugt und diese dann in digitalisierter Form an eine Bildverarbeitungseinrichtung übergeben wird, wobei eine digitalisierte Darstellung eines Oberflächendefekts im Sinne eines Testdefekts oder Referenzdefekts in die Aufnahme integriert also sozusagen eingeblendet wird. Die Bildverarbeitungseinrichtung behandelt das entsprechende Bild so, als ob es ein digitalisiertes Abbild der zu untersuchenden Oberfläche wäre, d. h. als ob die Oberfläche den entsprechenden Oberflächendefekt auch physisch bzw. real aufweisen würde. Somit kann nun überprüft werden, ob die Bildverarbeitungseinrichtung den Oberflächendefekt auch als solchen erkennt. Dabei wird der Oberflächendefekt vorzugsweise so gewählt, dass er von der Bildverarbeitungseinrichtung als Oberflächendefekt erkannt werden sollte. Es kann aber auch ein Oberflächendefekt gewählt werden, der nicht erkannt werden sollte, um zu prüfen, ob der Oberflächendefekt tatsächlich unerkannt bleibt.

Diese Vorgehensweise macht es nicht erforderlich, dass der Herstellungsprozess des Produkts unterbrochen wird, und zwar auch nicht bei der Herstellung von sehr schnell an der Kamera vorbei bewegten Stahlbändern. Darüber hinaus kann die Qualitätssicherung nahezu unbeeinflusst von der Überprüfung des Inspektionssystems erfolgen. Da in die tatsächlichen Aufnahmen von zu inspizierenden Oberflächen nur sehr lokal begrenzt digitalisierte Darstellungen von verhältnismäßig kleinen Oberflächendefekten integriert werden müssen, können die verbleibenden Teile der Abbildungen der tatsächlich zu inspizierenden Oberflächen unabhängig von der Überprüfung des Inspektionssystems von der Bildverarbeitungseinrichtung auf Fehler untersucht werden. Zudem führt die Berücksichtigung der tatsächlichen Oberflächen bei der Überprüfung des Inspektionssystems, wobei die Darstellungen von Oberflächendefekten in tatsächlich aufgenommene Aufnahmen von zu inspizierenden Oberflächen eingeblendet werden anstatt tatsächliche Abbildungen gegen Referenzabbildungen von Testoberflächen auszutauschen, dazu, dass eine nachträgliche Kalibrierung sehr viel zuverlässiger und angepasster an die tatsächlichen Oberflächen erfolgen kann.

Aufgrund der vorstehenden Vorteile der Erfindung ist es zudem wirtschaftlich möglich, das Inspektionssystem in sehr kurzen Zeitabständen, bedarfsweise quasikontinuierlich, zu überprüfen, um sofort erkennen zu können, wenn Anpassungen erforderlich sind. Die Überprüfung in sehr kurzen Zeitabständen erlaubt es zudem, eine ausreichende Datenbasis für eine sehr aussagekräftige statistische Auswertung zu erhalten.

Alternativ oder zusätzlich ist es möglich, digitalisierte Darstellungen von unterschiedlichen Oberflächendefekten zeitgleich und/oder nacheinander für die Überprüfung des Inspektionssystems zu nutzen. So kann eine differenziertere Aussage über die Güte der Qualitätssicherung erhalten werden, die beispielsweise abhängig ist von der Art und/oder Intensität der Oberflächendefekte. Die Intensität kann dabei beispielsweise durch die Höhe oder Tiefe des Defekts, sowie durch dessen Größe und/oder Ausdehnung bestimmt werden.

Als wenigstens eine Kamera kommt grundsätzlich jede Art von Kamera in Frage. Bevorzugt wird es jedoch eine Digitalkamera sein, weil diese direkt digitalisierte Abbildungen erzeugt und ein separater Schritt der Umwandlung der Aufnahme in eine digitalisierte Abbildung entfallen kann. Dann ist die Digitalisierungseinheit bereits in der Kamera integriert. Zudem können auch mehrere Kameras vorgesehen sein, um eine Abbildung von der zu inspizierenden Oberfläche mit zufriedenstellender Qualität zu erzeugen. Dabei kann die Abbildung einer Kamera oder mehrere Kameras mit wenigstens einer digitalisierten Darstellung eines Oberflächendefekts versehen und parallel oder nacheinander untersucht werden. Es kann aber auch vorgesehen sein, dass zunächst aus mehreren Aufnahmen etwa durch Überlagerung der Aufnahmen eine einzige digitalisierte Abbildung erzeugt wird, in die dann eine digitalisierte Darstellung eines Oberflächendefekts integriert wird.

Ganz grundsätzlich kann die digitalisierte Darstellung eines Oberflächendefekts mit Hilfe der Integrationseinheit dadurch in die digitalisierte Aufnahme von der zu inspizierenden Oberfläche integriert werden, dass die digitalisierte Darstellung des Oberflächendefekts an einer Stelle mit der digitalisierten Aufnahme der realen Oberfläche überlagert wird. Es wird aber bevorzugt so sein, dass die digitale Darstellung eines Oberflächendefekts im Bereich der Darstellung die digitalisierte Aufnahme der tatsächlichen Oberfläche ersetzt. Anders ausgedrückt, können die Pixel der Darstellung des Oberflächendefekts an entsprechender Stelle in der Abbildung der realen Oberfläche die Pixel der Abbildung der zu inspizierten Oberfläche ersetzen.

Je nach den Abmessungen des Produkts oder im Falle der parallelen Qualitätssicherung der mehreren Produkte können bei dem Inspektionssystem und dem entsprechenden Überprüfungsverfahren auch mehrere Kameras vorgesehen sein, die Aufnahmen von unterschiedlichen Oberflächen, unterschiedlichen Produkten und/oder unterschiedlichen Abschnitten einer Oberfläche erzeugen. Diese Aufnahmen können bedarfsweise parallel von einer Bildverarbeitungseinrichtung oder von mehreren Bildverarbeitungseinrichtungen auf Oberflächendefekte untersucht werden.

Hinsichtlich der wenigstens einen Kamera ist es naturgemäß bevorzugt, wenn diese sowohl die Aufnahme erzeugt, in die eine digitalisierte Darstellung eines echten und/oder synthetischen Oberflächendefekts integriert wird, als auch die Aufnahmen erzeugt, die ansonsten (unmanipuliert) der Bildverarbeitungseinrichtung zur Fehlersuche bei der laufenden Qualitätssicherung zugeführt werden. Es ist also vorzugsweise keine separate Kamera zur Erzeugung der mit Hilfe von digitalisierten Darstellungen von Oberflächendefekten zu manipulierenden Aufnahmen vorgesehen respektive zur Überprüfung des Inspektionssystems erforderlich.

Bei der digitalen Darstellung des wenigstens einen Oberflächendefekts muss es sich nicht um eine Abbildung eines realen Oberflächendefekts handeln. Es kann sich auch um einen künstlich erzeugten, also beispielsweise programmierten, Oberflächendefekt handeln. Dieser Oberflächendefekt muss auch nicht einem real denkbaren Oberflächendefekt nachempfunden sein. Der Oberflächendefekt kann bedarfsweise ohne Berücksichtigung realer Oberflächendefekte konstruiert werden. Dennoch wird des Verständnisses halber in einem solchen Fall auch im Folgenden weiter von einem Oberflächendefekt gesprochen, da sich dieser jedenfalls von einer optimalen Produktoberfläche unterscheiden wird. Zudem führt die Integration der digitalisierten Darstellung des Oberflächendefekts in die digitalisierte von der Kamera erzeugte Aufnahme zu einer künstlichen Aufnahme, die von der realen Abbildung abweicht.

Im Übrigen ist weder das Verfahren noch das Inspektionssystem darauf beschränkt, dass die digitalisierte Darstellung des Oberflächendefekts nur den Oberflächendefekt darstellt. Es wird bedarfsweise so sein, dass die entsprechende einen von einem nicht defekten Oberflächenanschnitt darstellt. Auf diese Weise kann in der der Bildverarbeitungseinrichtung zugeführten Aufnahme ein reproduzierbarer Übergang zwischen makelloser Oberfläche und Defekt erreicht werden. Auf diesen Übergang kann aber auch verzichtet werden zugunsten des Übergangs der realen Oberfläche zum Defekt der digitalisierten Darstellung des Oberflächendefekts.

Zudem wird die digitalisierte Darstellung des Oberflächendefekts vorzugsweise nur in einem verhältnismäßig kleinen Abschnitt der durch die Kamera erzeugten Aufnahme in diese Aufnahme integriert, um dadurch die kontinuierliche Qualitätssicherung möglichst wenig zu beeinflussen.

Grundsätzlich bevorzugt ist es weiter, wenn das beschriebene Verfahren zur Überprüfung des Inspektionssystems automatisch durchgeführt wird und ein manueller Eingriff nur dann erfolgt, wenn eine manuelle Kalibrierung, eine nicht automatisierte Anpassung oder dergleichen erforderlich ist.

Im Folgenden werden bevorzugte Ausgestaltungen des Verfahrens und der Vorrichtung zur Durchführung des Verfahrens gemeinsam beschrieben, ohne in jedem Falle explizit zwischen der Vorrichtung und dem Verfahren zu unterscheiden. Der Fachmann wird die bevorzugten Vorrichtungsmerkmale und Verfahrensmerkmale jedoch anhand des Kontextes erkennen.

Bei einer ersten bevorzugten Ausgestaltung des Verfahrens und der Vorrichtung ist vorgesehen, dass die von der Bildverarbeitungseinrichtung erkannten Fehler mittels einer Klassifizierungseinrichtung klassifiziert werden. Diese Klassifizierung kann anhand vorgegebener Parameter die Oberflächendefekte betreffend durchgeführt werden. Die erkannten Oberflächendefekte können dabei beispielsweise nach ihrer Art klassifiziert und somit in Kratzer, Dellen, Erhebungen, Oberflächenaufbrüche, Oxidationen, Verschmutzungen und/oder Fremdkörper eingeteilt werden. Alternativ oder zusätzlich können die erkannten Oberflächendefekte auch nach ihrer Intensität klassifiziert werden, welche durch die Höhe, Tiefe, Größe und/oder Ausdehnung bestimmt sein kann. Es kann also beispielsweise unterschieden werden, ob es sich um einen leichten, mittelschweren oder gravierenden Oberflächendefekt, etwa in Sinne eines leichten, mittelschweren oder tiefen Kratzers, handelt. Für den Fall, dass eine Klassifizierung der Oberflächendefekte durchgeführt wird, ist es bevorzugt, wenn ermittelt wird, ob die Klassifizierungseinrichtung den aufgrund der digitalisierten Darstellung eines Oberflächendefekts erkannten Fehler wie vorgegeben klassifiziert. Auf diese Weise kann die Kalibrierung verbessert bzw. die Güte der Qualitätssicherung besser beurteilt werden. Die Überprüfung der Klassifizierung kann zusätzlich oder alternativ zu der Ermittlung erfolgen, ob der in die Aufnahme der zu inspizierenden Oberfläche integrierte Oberflächendefekt erkannt wird oder nicht. Wenn überprüft wird, ob die Klassifizierung zutreffend erfolgt ist, lässt dies nämlich Rückschlüsse darauf zu, ob der Oberflächendefekt überhaupt als solcher erkannt wurde oder nicht.

Damit beurteilt werden kann, ob der wenigstens eine auf wenigstens eine digitalisierte Darstellung eines Oberflächendefekts zurückgehende Fehler erkannt wurde und/oder ob der Fehler wie vorgegeben klassifiziert wurde, bietet es sich an, wenn dies angezeigt, signalisiert und/oder gespeichert wird. Die Anzeige kann unmittelbar oder auf Anfrage erfolgen, während das Signalisieren optisch und/oder akustisch erfolgen kann. Das Speichern der entsprechenden Information hat den Vorteil, dass eine rechnergestützte Auswertung und/oder eine zeitversetzte Auswertung erfolgen kann.

Durch eine geeignete Wahl der digitalisierten Darstellung eines Oberflächendefekts oder der digitalisierten Darstellung unterschiedlicher Oberflächendefekte ist basierend auf der Erkenntnis, ob die Oberflächendefekte erkannt und/oder richtig klassifiziert werden, eine Ermittlung dahingehend möglich, ob vorgegebene Toleranzkriterien von dem Inspektionssystem überschritten werden. Geringfügige Abweichungen von den Vorgaben für das Erkennen von Fehlern können regelmäßig toleriert werden. Anders verhält es sich, wenn die Abweichungen zu groß werden und somit ein Toleranzkriterium überschritten wird. Das Überschreiten eines Toleranzkriteriums kann zudem bedarfsweise angezeigt, signalisiert und/oder gespeichert werden. Auf diese Weise erhält eine Aufsichtsperson eine Rückmeldung über das Überschreiten eines Toleranzbereichs und kann entsprechend eingreifen.

Alternativ oder zusätzlich kann bedarfsweise anhand der erkannten und/oder nicht erkannten Fehler, die auf wenigstens eine digitalisierte Darstellung wenigstens eines Oberflächendefekts zurückgehen, wenigstens eine Leistungskennzahl ermittelt werden, welche die Güte des Inspektionssystems bei der Erkennung von Oberflächendefekten charakterisiert. Auf diese Weise kann die Güte des Inspektionssystems besser quantifiziert werden. Alternativ oder zusätzlich kann wenigstens eine Leistungskennzahl anhand der Klassifizierung der auf wenigstens eine digitalisierte Darstellung wenigstens eines Oberflächendefekts zurückgehenden Fehler wie vorgegeben oder abweichend zu den Vorgaben ermittelt werden. Nach welchem Algorithmus die Leistungskennzahl ermittelt wird, ist weitgehend frei wählbar bzw. an den Einsatzzweck anpassbar.

Bedarfsweise kann verfahrensmäßig und vorrichtungsmäßig vorgesehen sein, dass die Bildverarbeitungseinrichtung und/oder die Klassifizierungseinrichtung kalibriert wird, wenn eine digitalisierte Darstellung eines Oberflächendefekts oder mehrere digitalisierte Darstellungen wenigstens eines Oberflächendefekts nicht als Fehler erkannt und/oder nicht wie vorgegeben klassifiziert wird bzw. werden. Auf diese Weise wird sichergestellt, dass das Inspektionssystem immer eine Qualitätssicherung mit ausreichender Güte ermöglicht. Dabei kann die Kalibrierung manuell erfolgen. Soweit dies möglich ist, wird es jedoch bevorzugt sein, die Kalibrierung automatisch durchzuführen, und zwar anhand der Daten, die durch die Überprüfung des Inspektionssystems zuvor erhalten wurden. Alternativ oder zusätzlich zu einer Kalibrierung des Inspektionssystems können die durch die Überprüfung des Inspektionssystems gewonnen Daten zum Zwecke eines Audits über die Qualitätskontrolle der Qualitätssicherung genutzt werden.

Damit die Qualitätssicherung des zu inspizierenden Produkts möglichst unbeeinflusst von der Überprüfung des Inspektionssystems bleibt, können die aufgrund realer Oberflächendefekte der inspizierten Oberfläche von der Bildverarbeitungseinrichtung erkannten Fehler als solche gespeichert werden und die aufgrund wenigstens einer digitalisierten Darstellung eines Oberflächendefekts von der Bildverarbeitungseinrichtung erkannten Fehler nicht oder abweichend, etwa an anderer Stelle, von den auf reale Oberflächendefekte zurückgehenden Fehlern gespeichert werden. Durch die unterschiedliche Handhabung der erkannten Fehler danach, ob sie auf die tatsächliche Aufnahme der Oberfläche oder auf die eingefügte digitalisierte Darstellung eines Oberflächendefekts zurückgeht, können beide Fehlerarten unterschieden werden. Dies kann zweckmäßig dazu genutzt werden, dass bei der Weiterverarbeitung des Produkts Stellen mit realen Fehlern ausgeschnitten und verworfen werden, während die aufgrund der digitalisierten Darstellung von Oberflächendefekten erkannten Fehler, also die nicht real existierenden Fehler, nicht dazu führen, dass ein Teil des Produkts ausgeschnitten und/oder verworfen wird. Sofern nicht ohne weiteres ein Teil des Produkts herausgeschnitten werden kann, wie dies etwa bei einem Stahlband der Fall ist, kann im Falle eines realen Fehlers auch das gesamte Produkt etwa in Form einer Platine verworfen werden.

Besonders zweckmäßig ist es, wenn die aufgrund einer digitalisierten Darstellung eines Oberflächendefekts von der Bildverarbeitungseinrichtung erkannten Fehler so abgespeichert werden, dass sie automatisch von auf reale Oberflächendefekte zurückgehenden Fehlern unterscheidbar sind. Dann kann automatisch nach der Art des Fehlers unterschieden werden. Die entsprechenden Daten können also sowohl für die Kalibrierung als auch für die Entscheidung über die weitere Verwendung des Produkts herangezogen werden.

Alternativ oder zusätzlich können die aufgrund realer Oberflächendefekte erkannten Fehler zusammen mit wenigstens einer zugehörigen Klassifizierungsinformation gespeichert werden. So lässt sich leichter entscheiden, ob der erkannte Fehler ein Verwerfen des Produkts oder eines Teils davon rechtfertigt.

Wenn die aufgrund realer Oberflächendefekte erkannten Fehler mit einer die Stelle des realen Oberflächendefekts auf der inspizierten Oberfläche charakterisierenden Ortsinformation verknüpft gespeichert werden, kann der die Stelle des Oberflächendefekts umfassende Bereich einfach und zuverlässig, bedarfsweise automatisch, entfernt oder verworfen werden. Dies kann im Falle eines Stahlblechs auch erst erfolgen, wenn das Stahlband zur weiteren Verwendung wieder vom Coil abgewickelt wird. Dabei ist es besonders bevorzugt, wenn diese Informationen zusammen mit wenigstens einer Klassifizierungsinformation gespeichert werden. Dann kann einfach ermittelt werden, ob der Oberflächendefekt an der entsprechenden Stelle ein Eingreifen erfordert oder toleriert werden kann.

Um zu überprüfen, ob ein bestimmter Oberflächendefekt vom Inspektionssystem erkannt wird oder welche Oberflächendefekte vom Inspektionssystem als Fehler erkannt werden, kann als digitalisierte Darstellung eines Oberflächendefekts beispielsweise eine synthetisch erzeugte Darstellung verwendet werden. Diese kann beispielsweise einen bestimmten Kontrastverlauf darstellen. Die synthetisch erzeugte Darstellung eines Oberflächendefekts muss also nicht ähnlich aussehen wie ein Oberflächendefekt, der real auftreten könnte. Auf diese Weise kann ggf. die Güte der Fehlererkennung durch das Inspektionssystem präziser ermittelt werden und/oder für die Überprüfung des Inspektionssystems wenigstes ein besonders zweckmäßiger Oberflächendefekt "maßgeschneidert" werden.

Alternativ oder zusätzlich kann als digitalisierte Darstellung eines Oberflächendefekts wenigstens eine digitalisierte Darstellung eines realen Oberflächendefekts, vorzugsweise in Form eines Kratzers, einer Delle, einer Erhebung, eines Oberflächenaufbruchs, einer Oxidation, einer oxidischen Schlackenzelle, einer Verschmutzung und/oder eines Fremdkörpers verwendet werden. Auf dieser Weise kann ggf. die Güte der Fehlerklassifizierung durch das Inspektionssystem präziser ermittelt werden.

Die Erfindung wird nachfolgend anhand einer lediglich ein Ausführungsbeispiel darstellenden Zeichnung näher erläutert. In der Zeichnung zeigt
- Fig. 1: ein erfindungsgemäßes Inspektionssystem zur Erkennung von Oberflächendefekten in schematischer Darstellung,
- Fig. 2: Verfahrensschritte eines erfindungsgemäßen Verfahrens in schematischer Darstellung und
- Fig. 3: weitere Verfahrenschritte des Verfahrens gemäß Fig. 2 in schematischer Darstellung.

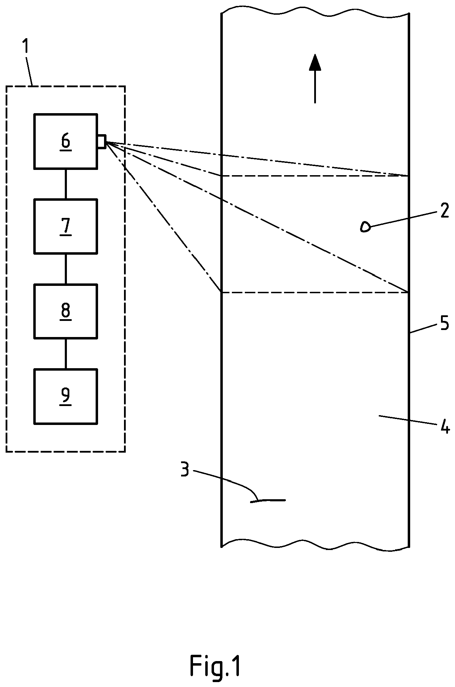

In der Fig. 1 ist ein Inspektionssystem 1 dargestellt, das Oberflächendefekte 2,3 auf einer Oberfläche 4 eines Produkts 5 in Form eines Stahlflachprodukts erkennen soll. Dazu umfasst das Inspektionssystem 1 eine Kamera 6, an der die zu inspizierende Oberfläche 4 des Produkts 5 in der durch den Pfeil angedeuteten Produktionsrichtung vorbeigeführt wird. Bei dem dargestellten und insoweit bevorzugten Inspektionssystem 1 erfasst die Kamera 6 die Oberfläche 4 des Produkts 5 über dessen gesamte Breite. Bei der Kamera 6 handelt es sich um eine Digitalkamera, welche unmittelbar eine digitalisierte Aufnahme von der Oberfläche 4 erzeugt.

Die von der Kamera 6 erzeugte digitalisierte Aufnahme wird an eine Bildverarbeitungseinrichtung 7 übergeben, welche die Aufnahme auf mögliche Oberflächedefekte 2,3 prüft, die von der Bildverarbeitungseinrichtung 7 als Fehler der Oberfläche 4 erkannt werden, wenn diese sich etwa hinsichtlich ihres Kontrasts in der Aufnahe hinreichend von fehlerfreien Bereichen der Oberfläche 4 abgrenzen. Bei der in der Fig. 1 dargestellten Aufnahme ist eine Delle enthalten, die von der Bildverarbeitungseinrichtung 7 erkannt werden sollte, soweit die Bildverarbeitungseinrichtung 7 richtig eingestellt, insbesondere kalibriert ist. An einer anderen Stelle der Oberfläche 4 ist ein Kratzer vorhanden.

Die Informationen betreffend einen von der Bildverarbeitungseinrichtung 7 erkannten Fehler werden an eine Klassifizierungseinrichtung 8 weitergegeben, welche die Fehler nach vorgegebenen Kriterien klassifiziert. Es kann beispielsweise eine Unterteilung erfolgen, ob es sich bei dem Fehler um einen Kratzer, eine Delle, eine Erhebung, einen Oberflächenaufbruch, eine Oxidation, eine oxidische Schlackenzelle, eine Verschmutzung und/oder einen Fremdkörper handelt. Alternativ oder zusätzlich kann eine Klassifizierung dahingehend erfolgen, wie schwerwiegend der jeweilige Fehler für die weitere Verwendung des Produkts 5 ist.

Die Informationen betreffend den jeweiligen Fehler und die jeweilige Klassifizierung des Fehlers wird zusammen mit Ortsinformationen darüber, wo der Fehler auf der Oberfläche 4 aufgetaucht ist, in einem Speicher 9 abgelegt. Die gespeicherten Informationen können dann zusammen mit dem Produkt 5 der weiteren Verwendung des Produkts 5 zugeführt werden, so dass die Fehler bei dieser weiteren Verwendung berücksichtigt werden können. Oberflächenabschnitte mit nicht tolerierbaren Fehlern können beispielsweise verworfen werden.

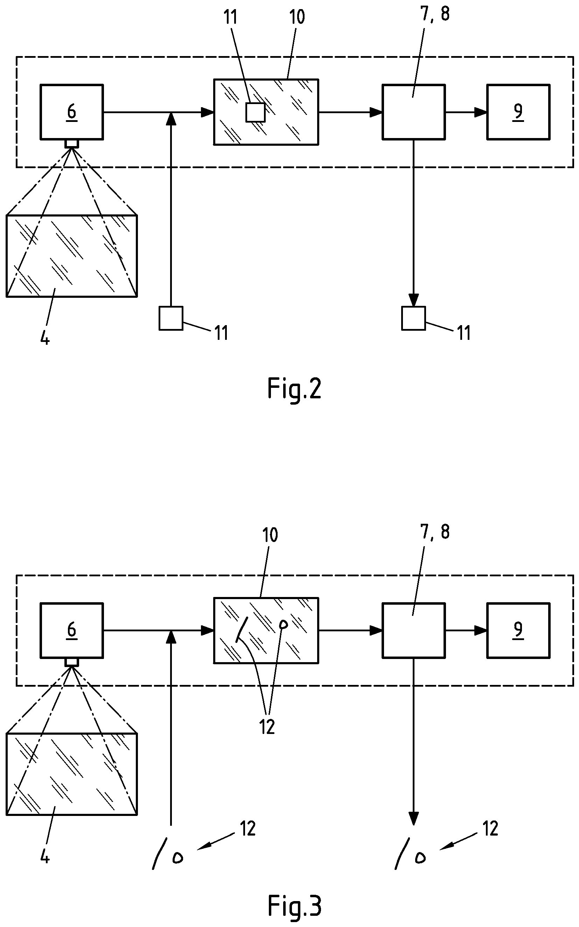

In der Fig. 2 ist dargestellt, wie das Inspektionssystem 1 gemäß Fig. 1 in regelmäßigen Abständen automatisch überprüft wird. Schematisch ist gezeigt, wie ein Abschnitt einer Oberfläche 4 eines Produkts von der Kamera aufgenommen wird, welche eine digitalisierte Aufnahme 10 von der Oberfläche 4 erzeugt. In diese digitalisierte Aufnahme 10 wird mittels einer nicht dargestellten Integrationseinheit eine digitalisierte Darstellung 11 eines synthetischen Oberflächendefekts integriert. Die digitalisierte Darstellung 11 nimmt einen sehr kleinen Bereich der resultierenden Aufnahme 10 ein. In der Fig. 2 ist die digitalisierte Darstellung 11 des Oberflächendefekts der Erkennbarkeit halber relativ zur Aufnahme 10 stark vergrößert dargestellt. Bei der digitalisierten Darstellung 11 des synthetischen Oberflächendefekts handelt es sich um eine Fläche mit unterschiedlichen Grauwerten und Kontrasten. Der entsprechende Oberflächendefekt wird daher als synthetisch bezeichnet, weil der Oberflächendefekt in dieser Form in der Praxis nicht vorkommen wird.

Die aus der Kombination der realen Aufnahme mit dem synthetischen Oberflächendefekt resultierende Aufnahme 10 wird der Bildverarbeitungseinrichtung 7 zugeleitet, die beim dargestellten und insoweit bevorzugten Ausführungsbeispiel mit einer Klassifizierungseinrichtung 8 verschmolzen ist. Die Bildverarbeitungseinrichtung 7 untersucht die Aufnahme 10 inklusive der digitalen Darstellung 11 des synthetischen Oberflächendefekts auf Fehler. Wird die digitale Darstellung 11 des synthetischen Oberflächendefekts oder ein realer Oberflächendefekt als Fehler der Oberfläche 4 erkannt, wird dieser von der Klassifizierungseinrichtung 8 klassifiziert. Parallel wird kontrolliert, ob die digitale Darstellung 11 des synthetischen Oberflächendefekts als Fehler erkannt und nach den Vorgaben richtig klassifiziert wird. Zudem wird ein infolge der digitalen Darstellung 11 des synthetischen Oberflächendefekts gefundener Fehler samt Klassifizierungsinformation und Ortsinformation ausgeschleust. Dies bedeutet, dass die infolge der digitalen Darstellung 11 des synthetischen Oberflächendefekts gegebenenfalls gefundenen Fehlerinformationen ausgeschleust und nur die auf reale Fehler zurückgehenden Fehlerinformationen als solche weiterverarbeitet werden. Die auf digitale Darstellungen 11 von Oberflächendefekten zurückgehenden Fehlerinformationen können bedarfsweise separat gespeichert oder weiterverarbeitet werden. So wird sichergestellt, dass die Qualitätssicherung eines Produkts 5 nicht von der Überprüfung des Inspektionssystems 1 beeinflusst wird.

Bedarfsweise kann die digitale Darstellung 11 eines synthetischen Oberflächendefekts nicht oder nur eingeschränkt klassifiziert werden, weil dieser Oberflächendefekt keinem real zu erwartenden Oberflächendefekt ähnelt. Dann oder auch unabhängig davon können in von der Kamera 6 erzeugte Aufnahmen 10 einer Oberfläche eines Produkts 5 mit einer Integrationseinheit bedarfsweise zusätzlich ein oder mehrere digitale Darstellungen 12 von Oberflächendefekten integriert werden, die realen Oberflächendefekten nachempfunden sind bzw. entsprechen. Vorliegend sind diese Oberflächendefekte eine Delle und ein Kratzer. Auch in diesem Falle wird die resultierende Aufnahme 10 von der Bildverarbeitungseinrichtung 7 auf Fehler untersucht. Werden Fehler gefunden, werden diese mittels der integrierten Klassifizierungseinrichtung 8 klassifiziert. Da die digitalen Darstellungen 12 von Oberflächendefekten mehr oder weniger realen Oberflächendefekten entsprechen, kann die Güte der Klassifizierung ggf. besser beurteilt werden, als bei den synthetischen Oberflächendefekten, die gegebenenfalls parallel untersucht werden.

Nicht im Einzelnen dargestellt ist, dass die Überprüfung des Inspektionssystems 1 in regelmäßigen zeitlichen Abständen erfolgt und bedarfsweise eine automatische Kalibrierung des Inspektionssystems 1 auslöst. Zudem wird anhand der erkannten nicht realen Fehler und deren Klassifizierung eine Leistungskennzahl zur Quantifizierung der Güte des Inspektionssystems 1 errechnet und zudem eine Anzeige ausgelöst, sobald bestimmte vorgegebene Toleranzkriterien überschritten werden.

## Patentansprüche

1. Verfahren zur Überprüfung eines Inspektionssystems (1) zur Erkennung von Oberflächendefekten (2,3) eines an wenigstens einer Kamera (6) vorbeigeführten Produkts (5) bei dem die wenigstens eine Kamera (6) wenigstens eine Aufnahme (10) von wenigstens einer Oberfläche (4) wenigstens eines Produkts (5) erzeugt, bei dem die wenigstens eine Aufnahme (10) digitalisiert an eine Bildverarbeitungseinrichtung (7) übergeben wird, bei dem wenigstens eine digitalisierte Darstellung (11,12) eines Oberflächendefekts (2,3) in die digitalisierte Aufnahme (10) integriert wird, bei dem die Bildverarbeitungseinrichtung (7) anhand der digitalisierten Aufnahme (10) inklusive der digitalisierten Darstellung (11,12) eines Oberflächendefekts (2,3) eine Fehlererkennung durchführt und bei dem ermittelt wird, ob die Bildverarbeitungseinrichtung (7) die digitalisierte Darstellung (11,12) eines Oberflächendefekts (2,3) als Fehler der inspizierten Oberfläche (4) erkennt.

2. Verfahren nach Anspruch 1,
bei dem die von der Bildverarbeitungseinrichtung (7) erkannten Fehler mittels einer Klassifizierungseinrichtung (8) klassifiziert werden und bei dem ermittelt wird, ob die Klassifizierungseinrichtung (8) den aufgrund der digitalisierten Darstellung (11,12) eines Oberflächendefekts (2,3) erkannten Fehler wie vorgegeben klassifiziert.

3. Verfahren nach Anspruch 1 oder 2,
bei dem angezeigt, signalisiert und/oder gespeichert wird, ob der wenigstens eine auf wenigstens eine digitalisierte Darstellung (11,12) eines Oberflächendefekts (2,3) zurückgehende Fehler erkannt und/oder wie vorgegeben klassifiziert worden ist.

4. Verfahren nach einem der Ansprüche 1 bis 3,
bei dem das Überschreiten von vorgegebenen Toleranzkriterien angezeigt, signalisiert und/oder gespeichert wird.

5. Verfahren nach einem der Ansprüche 1 bis 4,
bei dem anhand der erkannten und/oder nicht erkannten, auf wenigstens eine digitalisierte Darstellung (11,12) wenigstens eines Oberflächendefekts (2,3) zurückgehenden Fehler und/oder anhand der Klassifizierung der auf wenigstens eine digitalisierte Darstellung (11,12) wenigstens eines Oberflächendefekts (2,3) zurückgehenden Fehler übereinstimmend oder abweichend von Vorgaben wenigstens eine die Güte des Inspektionssystems (1) charakterisierende Leistungskennzahl ermittelt wird.

6. Verfahren nach einem der Ansprüche 1 bis 5,
bei dem die Bildverarbeitungseinrichtung (7) und/oder die Klassifizierungseinrichtung (8) manuell und/oder automatisch kalibriert wird, wenn eine digitalisierte Darstellung (11,12) eines Oberflächendefekts (2,3) oder mehrere digitalisierte Darstellungen (11,12) wenigstens eines Oberflächendefekts (2,3) nicht als Fehler erkannt und/oder nicht wie vorgegeben klassifiziert wird/werden.

7. Verfahren nach einem der Ansprüche 1 bis 6,
bei dem die aufgrund realer Oberflächendefekte (2,3) der inspizierten Oberfläche (4) von der Bildverarbeitungseinrichtung (7) erkannten Fehler als solche gespeichert werden und bei dem die aufgrund wenigstens einer digitalisierten Darstellung (11,12) eines Oberflächendefekts (2,3) von der Bildverarbeitungseinrichtung (7) erkannten Fehler nicht oder abweichend von den auf reale Oberflächendefekte (2,3) zurückgehenden Fehlern gespeichert werden.

8. Verfahren nach einem der Ansprüche 1 bis 7,
bei dem die aufgrund einer digitalisierten Darstellung (11,12) eines Oberflächendefekts (2,3) von der Bildverarbeitungseinrichtung (7) erkannten Fehler so abgespeichert werden, dass sie automatisch von auf reale Oberflächendefekte (2,3) zurückgehenden Fehlern unterscheidbar sind.

9. Verfahren nach einem der Ansprüche 1 bis 8,
bei dem die aufgrund realer Oberflächendefekte (2,3) erkannten Fehler zusammen mit wenigstens einer zugehörigen Klassifizierungsinformation gespeichert werden.

10. Verfahren nach einem der Ansprüche 1 bis 9,
bei dem die aufgrund realer Oberflächendefekte (2,3) erkannten Fehler, vorzugsweise zusammen mit wenigstens einer Klassifizierungsinformation, verknüpft mit einer die Stelle des realen Oberflächendefekts (2,3) auf der inspizierten Oberfläche (4) charakterisierenden Ortsinformation gespeichert werden.

11. Verfahren nach einem der Ansprüche 1 bis 10,
bei dem als digitalisierte Darstellung (11,12) eines Oberflächendefekts eine synthetisch erzeugte Darstellung verwendet wird.

12. Verfahren nach einem der Ansprüche 1 bis 11,
bei dem als digitalisierte Darstellung (11,12) eines Oberflächendefekts (2,3) wenigstens eine digitalisierte Darstellung (11,12) eines realen Oberflächendefekts (2,3), vorzugsweise in Form eines Kratzers, einer Delle, einer Erhebung, eines Oberflächenaufbruchs, einer Oxidation, einer Verschmutzung und/oder eines Fremdkörpers verwendet wird.

13. Überprüfbares Inspektionssystem (1) zur Erkennung von Oberflächendefekten (2,3) eines an wenigstens einer Kamera (6) vorbeigeführten Produkts (5), zur Durchführung eines Verfahrens nach einem der Ansprüche 1 bis 12, mit wenigstens einer Kamera (6) zur Erzeugung wenigstens einer Aufnahme (10) von wenigstens einer Oberfläche (4) wenigstens eines Produkts (5) und mit einer Digitalisierungseinheit zur Digitalisierung der wenigstens einen Aufnahme (10),
**dadurch gekennzeichnet, dass**
eine Integrationseinheit zum Integrieren einer digitalisierten Darstellung (11,12) eines Oberflächendefekts (2,3) in die digitalisierte Aufnahme (10) vorgesehen ist, dass eine Bildverarbeitungseinrichtung (7) zur Fehlererkennung anhand der digitalisierten Aufnahme (10) inklusive der digitalisierten Darstellung (11,12) eines Oberflächendefekts (2,3) vorgesehen ist und dass eine Ermittlungseinheit zur Ermittlung, ob durch die Bildverarbeitungseinrichtung (7) die digitalisierte Darstellung (11,12) eines Oberflächendefekts (2,3) als Fehler der inspizierten Oberfläche (4) erkannt wird, vorgesehen ist.

14. Vorrichtung nach Anspruch 13,
**dadurch gekennzeichnet, dass**
eine Klassifizierungseinrichtung (8) zur Klassifizierung der von der Bildverarbeitungseinrichtung (7) erkannten Fehler vorgesehen ist und, vorzugsweise, dass die Ermittlungseinheit zum Feststellen ausgebildet ist, ob die Klassifizierungseinrichtung (8) den aufgrund der digitalisierten Darstellung (11, 12) eines Oberflächendefekts (2,3) erkannten Fehler wie vorgegeben klassifiziert.

15. Vorrichtung nach Anspruch 13 oder 14,
**dadurch gekennzeichnet, dass**
eine Anzeigeeinrichtung, Signaleinrichtung und/oder Speichereinrichtung (9) zur Anzeige, Signalisierung und/oder Speicherung von Informationen darüber, ob der wenigstens eine auf die digitalisierte Darstellung (11,12) wenigstens eines Oberflächedefekts (2,3) zurückgehende Fehler erkannt und/oder wie vorgegeben klassifiziert worden ist, vorgesehen ist.

## Claims

1. Method for checking an examination system (1) for detecting surface defects (2, 3) of a product (5) which is guided past at least one camera (6), in which the at least one camera (6) produces at least one recording (10) of at least one surface (4) of at least one product (5), in which the at least one recording (10) is transmitted in digitized form to an image processing device (7), in which at least one digitized representation (11, 12) of a surface defect (2, 3) is integrated in the digitized recording (10), in which the image processing device (7) performs flaw detection on the basis of the digitized recording (10) that includes the digitized representation (11, 12) of the surface defect (2, 3), and in which it is ascertained whether the image processing device (7) detects the digitized representation (11, 12) of a surface defect (2, 3) as a flaw of the inspected surface (4).

2. Method according to Claim 1,
in which the flaws detected by the image processing device (7) are classified by way of a classification device (8) and in which it is ascertained whether the classification device (8) classifies as specified the flaw, which has been detected on the basis of the digitized representation (11, 12) of a surface defect (2, 3).

3. Method according to Claim 1 or 2,
in which it is indicated, signalled and/or stored whether the at least one flaw, which traces back to at least one digitized representation (11, 12) of a surface defect (2, 3), has been detected and/or been classified as specified.

4. Method according to one of Claims 1 to 3,
in which exceeding specified tolerance criteria is indicated, signalled and/or stored.

5. Method according to one of Claims 1 to 4,
in which at least one key performance indicator is ascertained that characterizes the quality of the inspection system (1) on the basis of the detected and/or non-detected flaws that trace back to at least one digitized representation (11, 12) of at least one surface defect (2, 3) and/or on the basis of the classification of the flaws that trace back to at least one digitized representation (11, 12) of at least one surface defect (2, 3) in correspondence with or deviating from specifications.

6. Method according to one of Claims 1 to 5,
in which the image processing device (7) and/or the classification device (8) is calibrated manually and/or automatically when a digitized representation (11, 12) of a surface defect (2, 3), or a plurality of digitized representations (11, 12) of at least one surface defect (2, 3), is/are not detected as flaws and/or not classified as specified.

7. Method according to one of Claims 1 to 6,
in which the flaws that are detected by the image processing device (7) on the basis of real surface defects (2, 3) of the inspected surface (4) are stored as such and in which the flaws that are detected by the image processing device (7) on the basis of at least one digitized representation (11, 12) of a surface defect (2, 3) are not stored, or are stored differently from the flaws that trace back to real surface defects (2, 3).

8. Method according to one of Claims 1 to 7,
in which the flaws that are detected by the image processing device (7) on the basis of a digitized representation (11, 12) of a surface defect (2, 3) are stored such that they are automatically distinguishable from flaws that trace back to real surface defects (2, 3).

9. Method according to one of Claims 1 to 8,
in which the flaws that are detected on the basis of real surface defects (2, 3) are stored together with at least one piece of associated classification information.

10. Method according to one of Claims 1 to 9,
in which the flaws that are detected on the basis of real surface defects (2, 3) are stored, preferably together with at least one piece of classification information, linked with a location information that characterizes the site of the real surface defect (2, 3) on the inspected surface (4).

11. Method according to one of Claims 1 to 10,
in which a synthetically produced representation is used as the digitized representation (11, 12) of a surface defect.

12. Method according to one of Claims 1 to 11,
in which at least one digitized representation (11, 12) of a real surface defect (2, 3), preferably in the form of a scratch, a dent, a protrusion, a surface disruption, oxidation, soiling and/or foreign matter, is used as the digitized representation (11, 12) of a surface defect (2, 3).

13. Checkable inspection system (1) for detecting surface defects (2, 3) of a product (5) which is guided past at least one camera (6), for performing a method according to one of Claims 1 to 12, having at least one camera (6) for producing at least one recording (10) of at least one surface (4) of at least one product (5) and having a digitization unit for digitizing the at least one recording (10),
**characterized in that**
an integration unit for integrating a digitized representation (11, 12) of a surface defect (2, 3) in the digitized recording (10) is provided, **in that** an image processing device (7) for flaw detection on the basis of the digitized recording (10) including the digitized representation (11, 12) of a surface defect (2, 3) is provided, and **in that** an ascertainment unit for ascertaining whether the digitized representation (11, 12) of a surface defect (2, 3) is detected by the image processing device (7) as a flaw of the inspected surface (4) is provided.

14. Apparatus according to Claim 13,
**characterized in that**
a classification device (8) for classifying the flaws that are detected by the image processing device (7) is provided and, preferably, **in that** the ascertainment unit is adapted to establish whether the classification device (8) classifies as specified the flaw that has been detected on the basis of the digitized representation (11, 12) of a surface defect (2, 3).

15. Apparatus according to Claim 13 or 14,
**characterized in that**
a display device, signalling device and/or storage device (9) for displaying, signalling and/or storing information about whether the at least one flaw that traces back to the digitized representation (11, 12) of at least one surface defect (2, 3) is detected and/or classified as specified is provided.

## Revendications

1. Procédé de vérification d'un système d'inspection (1) destiné à détecter des imperfections de surface (2, 3) d'un produit (5) passant devant au moins une caméra (6), dans lequel l'au moins une caméra (6) génère au moins un enregistrement (10) d'au moins une surface (4) d'au moins un produit (5), dans lequel l'au moins un enregistrement (10) est transféré sous forme numérisée à un dispositif de traitement d'image (7), dans lequel au moins une représentation numérisée (11, 12) d'une imperfection de surface (2, 3) est intégrée dans l'enregistrement numérisé (10), dans lequel le dispositif de traitement d'image (7) effectue une détection de défaut sur la base de l'enregistrement numérique (10) incluant la représentation numérisée (11, 12) d'une imperfection de surface (2, 3), et dans lequel on détermine si le dispositif de traitement d'image (7) détecte la représentation numérisée (11, 12) d'une imperfection de surface (2, 3) comme un défaut de la surface inspectée (4).

2. Procédé selon la revendication 1,
dans lequel les défauts reconnus par le dispositif de traitement d'image (7) sont classés au moyen d'un dispositif de classement (8), et dans lequel on détermine si le dispositif de classement (8) classe le défaut détecté sur la base de la représentation numérisée (11, 12) d'une imperfection de surface (2, 3) comme spécifié.

3. Procédé selon la revendication 1 ou 2,
dans lequel on affiche, signale et/ou mémorise si l'au moins un défaut dû à au moins une représentation numérisée (11, 12) d'une imperfection de surface (2, 3) est détecté et/ou classé comme spécifié.

4. Procédé selon l'une des revendications 1 à 3,
dans lequel le dépassement de critères de tolérance prédéterminés est affiché, signalé et/ou mémorisé.

5. Procédé selon l'une des revendications 1 à 4,
dans lequel un indicateur de performance caractérisant la qualité du système d'inspection (1) est déterminé par coïncidence ou écart par rapport à des spécifications, sur la base du défaut détecté et/ou non détecté, dû à au moins une représentation numérisée (11, 12) d'au moins une imperfection de surface (2, 3), et/ou sur la base du classement du défaut dû à au moins une représentation numérisée (11, 12) d'au moins une imperfection de surface (2, 3).

6. Procédé selon l'une des revendications 1 à 5,
dans lequel le dispositif de traitement d'image (7) et/ou le dispositif de classification (8) sont étalonnés manuellement et/ou automatiquement si une représentation numérisée (11, 12) d'une imperfection de surface (2, 3) ou une pluralité de représentations numérisées (11, 12) d'au moins une imperfection de surface (2, 3) ne sont pas détectées comme un défaut et/ou classées comme spécifié.

7. Procédé selon l'une des revendications 1 à 6,
dans lequel les défauts, détectés par le dispositif de traitement d'image (7) sur la base d'imperfections de surface réelles (2, 3) de la surface inspectée (4), sont mémorisés en tant que tels, et dans lequel les défauts, détectés par le dispositif de traitement d'image (7) sur la base d'au moins une représentation numérisée (11, 12) d'une imperfection de surface (2, 3), ne sont pas mémorisés ou sont mémorisés comme s'écartant des défauts dus à des imperfections de surface réelles (2, 3).

8. Procédé selon l'une des revendications 1 à 7, dans lequel les défauts, détectés par le dispositif de traitement d'image (7) sur la base d'une représentation numérisée (11, 12) d'une imperfection de surface (2, 3), sont mémorisés de manière à pouvoir être distingués automatiquement des défauts dus à des imperfections de surface réelles (2, 3).

9. Procédé selon l'une des revendications 1 à 8,
dans lequel les défauts détectés sur la base d'imperfections de surface réelles (2, 3) sont mémorisés avec au moins une information de classement associée.

10. Procédé selon l'une quelconque des revendications 1 à 9,
dans lequel les défauts, détectés sur la base d'imperfections de surface réelles (2, 3), sont mémorisés de préférence conjointement avec au moins une information de classement associée à une information de localisation caractérisant l'emplacement de l'imperfection de surface réelle (2, 3) sur la surface inspectée (4).

11. Procédé selon l'une des revendications 1 à 10,
dans lequel une représentation générée synthétiquement est utilisée comme représentation numérisée (11, 12) d'une imperfection de surface.

12. Procédé selon l'une des revendications 1 à 11,
dans lequel au moins une représentation numérisée (11, 12) d'une imperfection de surface réelle (2, 3), de préférence sous la forme d'une éraflure, d'une bosse, d'une saillie, d'une rupture de surface, d'une oxydation, d'un encrassement et/ou d'un corps étranger est utilisée comme représentation numérisée (11, 12) d'une imperfection de surface (2, 3).

13. Système d'inspection vérifiable (1), destiné à détecter des imperfections de surface (2, 3) d'un produit (5) passant devant au moins une caméra (6), pour mettre en oeuvre un procédé selon l'une des revendications 1 à 12, le système d'inspection vérifiable comprenant au moins une caméra (6) destinée à produire au moins un enregistrement (10) d'au moins une surface (4) d'au moins un produit (5) et comprenant une unité de numérisation destinée à numériser l'au moins un enregistrement (10), **caractérisé en ce qu'**il est prévu une unité d'intégration destinée à intégrer une représentation numérisée (11, 12) d'une imperfection de surface (2, 3) dans l'enregistrement numérisé (10), **en ce qu'**il est prévu un dispositif de traitement d'image (7) destiné à détecter des défauts sur la base de l'enregistrement numérisé (10) incluant la représentation numérisée (11, 12) d'une imperfection de surface (2, 3) et **en ce qu'**il prévu une unité de détermination destinée à déterminer si la représentation numérisée (11, 12) d'une imperfection de surface (2, 3) est détectée par le dispositif de traitement d'image (7) comme défaut de la surface inspectée (4).

14. Dispositif selon la revendication 13,
**caractérisé en ce qu'**il est prévu un dispositif de classement (8) destiné à classer les défauts détectés par le dispositif de traitement d'image (7) et de préférence **en ce que** l'unité de détermination est conçue pour déterminer si le dispositif de classement (8) classe le défaut, détecté sur la base de la représentation numérisée (11, 12) d'une imperfection de surface (2, 3), comme prescrit.

15. Dispositif selon la revendication 13 ou 14,
**caractérisé en ce qu'**il est prévu un dispositif d'affichage, un dispositif de signalisation et/ou un dispositif de mémorisation (9) destinés à afficher, signaler et/ou mémoriser des informations sur le fait de savoir si l'au moins un défaut dû à la représentation numérisée (11, 12) d'au moins une imperfection de surface (2,3) a été détecté et/ou classé comme prescrit.
